# EUROPÄISCHE PATENTSCHRIFT

(11) **EP 0 829 626 B1**
(45) Veröffentlichungstag und Bekanntmachung des Hinweises auf die Patenterteilung: **20.03.2002**
(21) Anmeldenummer: 97112827.7
(22) Anmeldetag: 25.07.1997
(51) Int. Cl.: F02B 37/16

(54) **Ventil an einer Brennkraftmachine**
Valve of an internal combustion engine
Soupape d'un moteur à combustion interne

(30) Priorität: 12.09.1996 DE 19637055
(43) Veröffentlichungstag der Anmeldung: 18.03.1998
(73) Patentinhaber: ROBERT BOSCH GMBH, 70442 Stuttgart (DE)
(72) Erfinder: Schulz, Wolfgang, 74321 Bietigheim-Bissingen (DE); Krimmer, Erwin, Ing., 73655-Plüderhausen (DE)

(56) Entgegenhaltungen:
- EP-A- 0 398 379
- DE-A- 3 804 013
- FR-A- 2 603 683
- US-A- 4 633 898

## Beschreibung

### Stand der Technik

Die Erfindung geht aus von einem Ventil an einer Brennkraftmaschine nach der Gattung des Anspruchs 1. Es ist schon ein derartiges Ventil bekannt (DE-OS 38 04 013), das für Brennkraftmaschinen vorgesehen ist, die über eine Aufladung der angesaugten Luft mittels einer Verdichtungseinrichtung, zum Beispiel einem Turbolader, verfügen. Insbesondere mechanisch angetriebene Verdichtungseinrichtungen besitzen aufgrund ihrer Trägheit die Eigenschaft, daß es beim Übergang vom Aufladebetrieb mit der Verdichtungseinrichtung in den ohne Betrieb der Verdichtungseinrichtung vorgesehenen Schubbetrieb der Brennkraftmaschine zu einem sogenannten Nachlaufen der Verdichtungseinrichtung kommen kann. Dabei wird bei bereits geschlossener Drosselklappe weiterhin Luft von der Verdichtungseinrichtung gefördert, die dann an der geschlossenen Drosselklappe aufprallt und zurückströmt, so daß es zur Beschädigung oder sogar zur Zerstörung der Verdichtungseinrichtung kommen kann. Um dies zu verhindern, ist eine Bypassleitung vorgesehen, die stromaufwärts der Drosselklappe abzweigt und weiter stromaufwärts der Verdichtungseinrichtung wieder zum Ansaugrohr führt. In der Bypassleitung ist das Ventil untergebracht, das beim Schubbetrieb der Brennkraftmaschine öffnet, um die von der geschlossenen Drosselklappe rückströmende Luft in der vom Ventil geöffneten Bypassleitung um die Verdichtungseinrichtung herumzuleiten. Die Bypassleitung ist als Schlauchleitung ausgebildet, in der das Ventil üblicherweise mittels zweier Schlauchschellen eingebaut ist. Beim Übergang vom Aufladebetrieb in den Schubbetrieb ohne Verdichtungseinrichtung kann es zu einem relativ hohen Überdruck in der Schlauchleitung kommen, mit der Gefahr, daß es zu einem Loslösen des Ventils an den Schlauchschellen kommt. Außerdem ist diese Befestigungsweise mittels Schlauchschellen relativ aufwendig und ermöglicht keine kostengünstige Montage.

Bekannt ist ebenfalls ein derartiges Ventil an einer Brennkraftmaschine (EP-A-0 398 379), das direkt an der Ansaugeinrichtung durch eine Verschraubung oder eine Verbördelung befestigt ist und bei dem die Ansaugeinrichtung einen Teil des Ventilgehäuses und den Ventilsitz bildet.

Bei einem Schieberventil mit Unterdruck-Stellmotor (US-A-4 633 898) ist eine Dichtungsplatte mittels eines Bajonettverschlusses gegen einen Gehäuseboden gespannt.

### Vorteile der Erfindung

Das erfindungsgemäße Ventil an einer Brennkraftmaschine mit den kennzeichnenden Merkmalen des Anspruchs 1 hat demgegenüber den Vorteil, daß eine zuverlässige und verdrehsichere Halterung des Ventils erfolgt. Von besonderem Vorteil ist dabei, daß das Ventil in einfacher Art und Weise an der Ansaugeinrichtung montiert werden kann, so daß sich die Montagekosten reduzieren lassen. Besonders vorteilhaft ist außerdem ein einfacher und kompakter Aufbau des Ventils.

Durch die in den Unteransprüchen aufgeführten Maßnahmen sind vorteilhafte Weiterbildungen und Verbesserungen des im Anspruch 1 angegebenen Ventils an einer Brennkraftmaschine möglich.

Vorteilhaft ist weiterhin, daß ein stutzenförmiges Aufnahmeelement für das Ventil mit unterschiedlichem Öffnungsquerschnitt ausgebildet werden kann, um in einfacher Art und Weise eine Anpassung der in der Bypassleitung um die Verdichtungseinrichtung strömenden Luftmenge an Brennkraftmaschinen mit höherer oder kleinerer Leistung zu ermöglichen. Von Vorteil ist ferner eine vorgesehene Rastverbindung zweier Gehäuseteile des Ventils, die eine kleine, kompakte und leichte Bauweise des Ventils erlaubt. Besonders vorteilhaft ist überdies, daß ein Membranteller des Ventils bei Bedarf mit Gewichten beschwert werden kann, um so das Betriebsgeräusch des Ventils zu verändern, so daß durch eine angepaßte Schwingungsabstimmung eine optimale Geräuschabstimmung im Fahrzeug erfolgen kann.

### Zeichnung

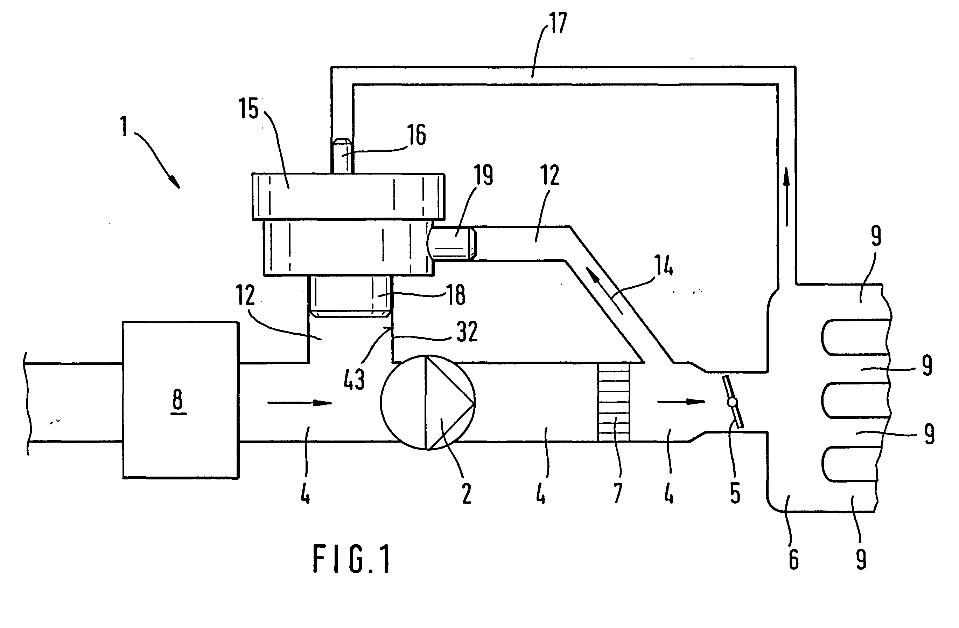

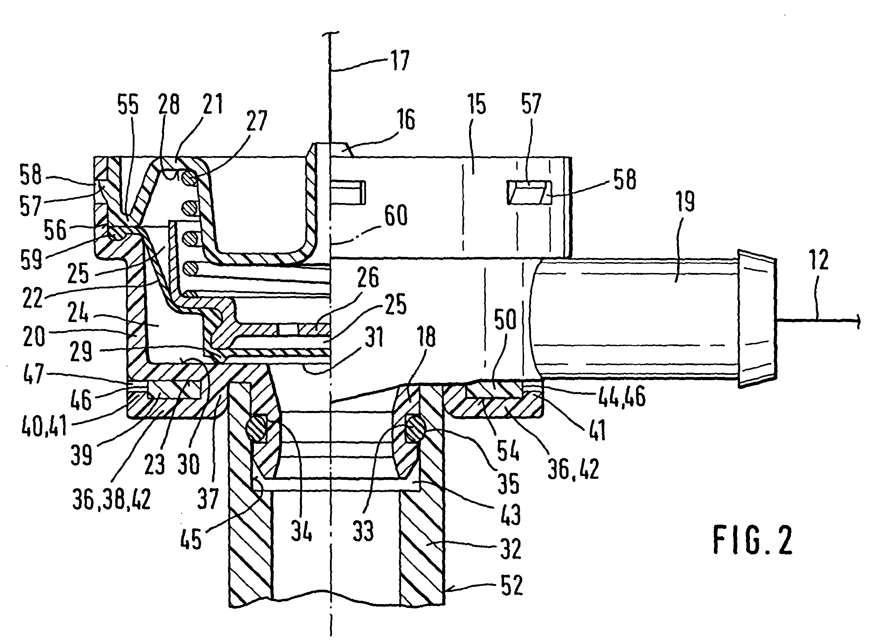

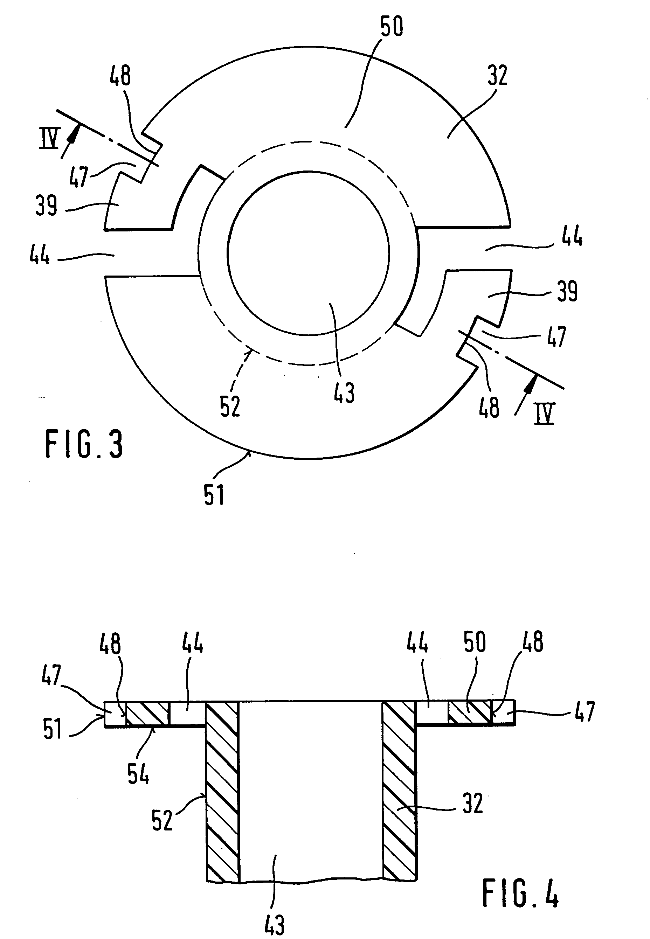

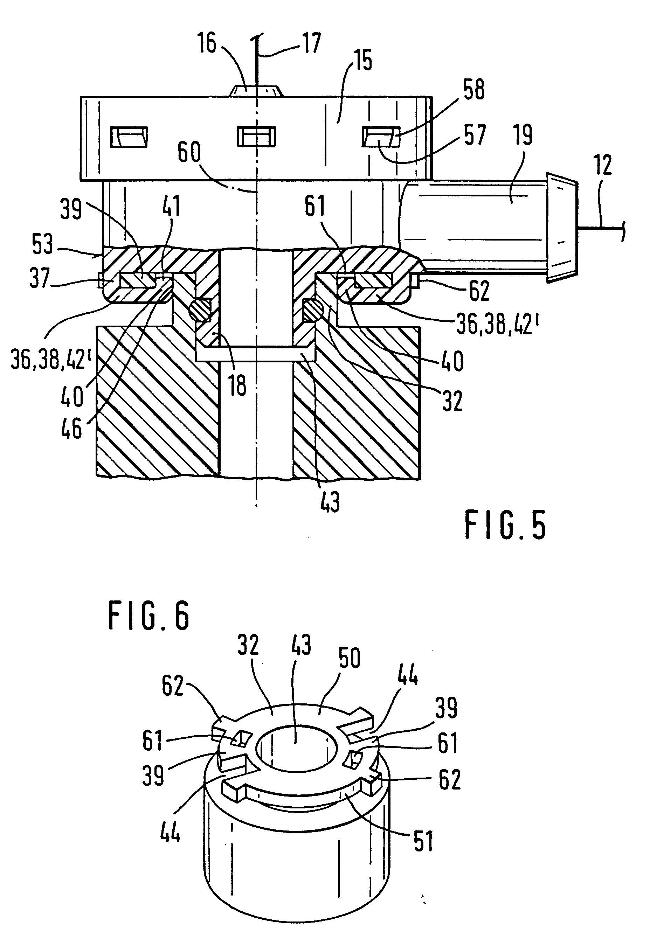

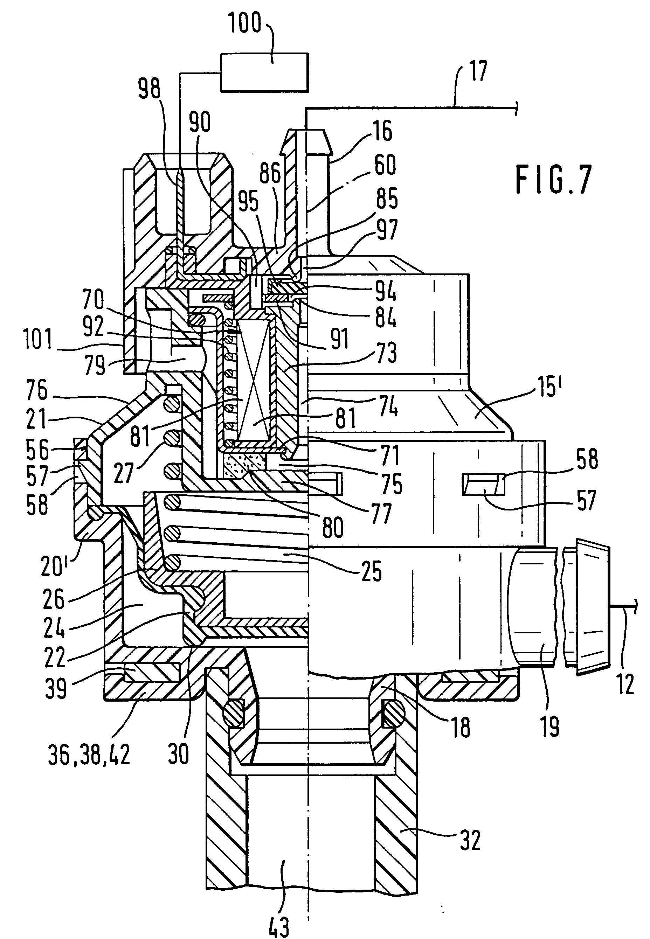

Ausführungsbeispiele der Erfindung sind in der Zeichnung vereinfacht dargestellt und in der nachfolgenden Beschreibung näher erläutert. Es zeigen Figur 1 in schematisch vereinfachter Darstellungsweise eine Brennkraftmaschine mit Verdichtungseinrichtung und Ventil, Figur 2 eine teilweise Schnittdarstellung des erfindungsgemäßen Ventils, Figur 3 eine Draufsicht eines Aufnahmeelements für das Ventil, Figur 4 einen Schnitt entlang einer Linie IV-IV durch das Aufnahmeelement in Figur 3, Figur 5 ein zweites erfindungsgemäßes Ausführungsbeispiel des Ventils, Figur 6 eine perspektivische Darstellung des Aufnahmeelements in Figur 5, Figur 7 ein drittes erfindungsgemäßes Ausführungsbeispiel des Ventils.

### Beschreibung der Ausführungsbeispiele

In Figur 1 ist in schematisch vereinfachter Darstellungsweise eine Brennkraftmaschine 1 gezeigt, die über eine Verdichtungseinrichtung 2 zur Verdichtung der von der Brennkraftmaschine 1 angesaugten Luft verfügt. Bei der Verdichtungseinrichtung 2 kann es sich um einen mechanischen Lader bekannter Bauart, beispielsweise einen Roots-Lader, einen Flügelzellenlader, einen Spirallader, einen Rotationskolbenlader, einen Abgasturbolader, einen Druckwellenlader oder dergleichen, handeln. Die Verdichtungseinrichtung 2 ist an einer Ansaugeinrichtung vorgesehen, die von einem Ansaugrohr 4, einem Sammelsaugrohr 6 und zum Beispiel mehreren Einzelsaugrohren 9 der Brennkraftmaschine 1 gebildet wird. Die Ansaugluft wird beispielsweise über einen nicht näher dargestellten Luftfilter in das Ansaugrohr 4 gesaugt und gelangt weiter stromabwärts zur Verdichtungseinrichtung 2. Anschließend wird die Ansaugluft bei bestimmten Betriebszuständen der Brennkraftmaschine 1 von der Verdichtungseinrichtung 2 verdichtet und dann von einem stromabwärts der Verdichtungseinrichtung 2 vorgesehenen Drosselorgan 5 zugemessen, um danach in das Sammelsaugrohr 6 weiterzuströmen. Das Drosselorgan 5 ist beispielsweise in Form einer Drosselklappe ausgebildet und drehbar im Ansaugrohr 4 untergebracht. Zwischen der Verdichtungseinrichtung 2 und der Drosselklappe 5 kann ein Ladeluftkühler 7 bekannter Bauart eingebaut sein. Des weiteren kann stromaufwärts der Verdichtungseinrichtung 2 ein Luftmassenmesser 8 in einer zum Beispiel aus der DE-OS 44 41 874 bekannten Bauart vorgesehen sein, um die im Ansaugrohr 4 strömende Luftmasse zu ermitteln. Die von der Brennkraftmaschine 1 angesaugte Luft wird von der Verdichtungseinrichtung 2 verdichtet und beispielsweise mittels des Ladeluftkühlers 7 abgekühlt, um in geöffneter Stellung der Drosselklappe 5 über das Sammelsaugrohr 6 in die Einzelsaugrohre 9 weiterzuströmen, in die beispielsweise mittels nicht näher dargestellter Brennstoffeinspritzventile Brennstoff abgegeben wird, um ein zündfähiges Brennstoff-Luft-Gemisch aufzubereiten, das dann in Brennräumen der Brennkraftmaschine 1 verbrennen kann.

Insbesondere mechanisch angetriebene Verdichtungseinrichtungen 2 besitzen aufgrund ihrer Trägheit die Eigenschaft, daß es beim Übergang vom Aufladebetrieb mit der Verdichtungseinrichtung 2 in den Schubbetrieb ohne Betrieb der Verdichtungseinrichtung 2 zu einem sogenannten Nachlaufen der Verdichtungseinrichtung 2 kommen kann. Dabei wird bei bereits geschlossener Drosselklappe 5 Luft von der Verdichtungseinrichtung 2 gefördert, die dann an der geschlossenen Drosselklappe 5 aufprallt und zurückströmt, so daß es zur Beschädigung oder sogar zur Zerstörung der Verdichtungseinrichtung 2 kommen kann. Um dies zu verhindern, ist eine zum Beispiel in Form einer Schlauchleitung ausgebildete Bypassleitung 12 vorgesehen, die, wie in Figur 1 dargestellt ist, zwischen der Drosselklappe 5 und der Verdichtungseinrichtung 2 abzweigt und stromaufwärts der Verdichtungseinrichtung 2 wieder in das Ansaugrohr 4 führt. Die Bypassleitung 12 ist an ein Ventil 15 angeschlossen, das die Bypassleitung 12 öffnen oder schließen kann. Ein derartiges Ventil 15 ist dem Fachmann als sogenanntes Schubabschaltventil bekannt. Zur Befestigung des Ventils 15 am Ansaugrohr 4 wird dieses mit einem Anschlußstutzen 18 in ein stromaufwärts der Verdichtungseinrichtung 2 vorgesehenes, zum Beispiel seitlich am Ansaugrohr 4 ausgebildetes, rohrförmiges Aufnahmeelement 32 eingeführt. Das Ventil 15 nimmt nur bei bestimmten Betriebszuständen der Brennkraftmaschine 1, insbesondere beim Schubbetrieb, eine Offenstellung ein und ist ansonsten geschlossen. Es ermöglicht, daß beim Übergang vom Aufladebetrieb der Verdichtungseinrichtung 2 in den Schubbetrieb der Brennkraftmaschine 1 die aufgrund des Nachlaufens der Verdichtungseinrichtung 2 bei geschlossener Drosselklappe 5 unnötigerweise geförderte Luft in der Bypassleitung 12 um die Verdichtungseinrichtung 2 herumgeleitet werden kann. Die Richtung der in der Bypassleitung 12 rückströmenden Luft ist in der Figur 1 durch einen Pfeil 14 gekennzeichnet. Das Aufnahmeelement 32 kann mit einem unterschiedlichen Öffnungsquerschnitt einer Aufnahmeöffnung 43 ausgebildet werden, um in einfacher Art und Weise eine Anpassung der in der Bypassleitung 12 um die Verdichtungseinrichtung 2 herumströmenden Luftmenge an Brennkraftmaschinen mit höherer oder kleinerer Leistung zu ermöglichen. Die Ansteuerung des Ventils 15 erfolgt zum Beispiel durch den sich bei schließender Drosselklappe 5 stromabwärts der Drosselklappe 5 einstellenden Unterdruck, der dem Ventil 15 über eine zum Beispiel an das Sammelsaugrohr 6 angeschlossene, beispielsweise in Form einer Schlauchleitung ausgebildete Steuerleitung 17 zugeführt wird, das hierzu über einen stutzenförmigen Unterdruckanschluß 16 verfügt. Die Steuerleitung 17 führt vom Ventil 15 stromabwärts der Drosselklappe 5 beispielsweise in das Sammelsaugrohr 6. Es ist aber auch möglich, die Steuerleitung 17 bereits stromabwärts der Drosselklappe 5 mit dem Ansaugrohr 4 zu verbinden.

Wie in Figur 2 näher dargestellt ist, besitzt das Ventil 15 zum Beispiel ein zweiteiliges Gehäuse, das sich aus einem topfförmigen unteren Gehäuseteil 20 und einem oberen Gehäuseteil 21 zusammensetzt. Beide Gehäuseteile 20, 21 bestehen vorzugsweise aus Kunststoff. Der obere Gehäuseteil 21 ist in den topfförmigen, etwas querschnittsgrößeren unteren Gehäuseteil 20 eingesetzt. Zur Verbindung des oberen Gehäuseteils 21 mit dem unteren Gehäuseteil 20 dient eine Rastverbindung, die von Rasthaken 57 gebildet wird, welche von einer Mantelfläche 56 des oberen Gehäuseteils 21 etwas abstehen. Die Rasthaken 57 sind am Umfang der Mantelfläche 56 des oberen Gehäuseteils 21 gleichmäßig verteilt angeordnet und besitzen einen sich zum Anschlußstutzen 18 hin verjüngenden, pfeilförmigen beziehungsweise widerhakenförmigen Querschnitt. Korrespondierend zu den Rasthaken 57 weist das untere Gehäuseteil 20 rechteckförmige Rastöffnungen 58 auf. Beim Einsetzen des oberen Gehäuseteils 21 in den unteren Gehäuseteil 20 wird ein V-förmig umgebogen gestalteter Rand 55 des oberen Gehäuseteils 20 mit den Rasthaken 57 etwas radial nach innen zu einer Längsachse 60 des Ventils 15 hin elastisch verformt, um in einer nach dem vollständigen Einführen des oberen Gehäuseteils 21 in den unteren Gehäuseteil 20 erreichten Raststellung mit den Rasthaken 57 in die korrespondierend vorgesehenen, rechteckförmigen Rastöffnungen 58 des unteren Gehäuseteils 21 einzurasten, so daß eine lösbare Verbindung beider Gehäuseteile 20, 21 erfolgt. Für einen möglichen Ausbau des oberen Gehäuseteils 21 ist es lediglich erforderlich, die Rasthaken 57 radial nach innen zur Längsachse 60 zu drücken, um anschließend das obere Gehäuseteil 21 aus dem unteren Gehäuseteil 20 herausziehen zu können.

Zwischen den beiden Gehäuseteilen 20, 21 ist eine bewegliche Wandung in Form einer elastischen Membran 22 an ihrem Umfang eingespannt. Dabei liegt die Membran 22 mit ihrem Umfang an einem sich radial nach innen erstreckenden Klemmkragen 59 des unteren Gehäuseteils 20 an und wird durch den Rand 55 des oberen Gehäuseteils 21 in dessen eingerastetem Zustand elastisch gepreßt und gehalten. Die Membran 22 trennt einen Ventilraum 24 von einem gegenüberliegenden Steuerraum 25. Der Steuerraum 25 steht in Verbindung mit dem Unterdruckanschluß 16 des Ventils 15. Auf der dem Unterdruckanschluß 16 zugewandten Seite der Membran 22 ist ein mit der Membran 22 verbundener Membranteller 26 vorgesehen, der einerseits dazu dient, der Membran 22 eine gewisse Steifigkeit zu verleihen und andererseits zur Abstützung einer Feder 27, die an dem Membranteller 26 und an einem Boden 28 des oberen Gehäuseteils 21 anliegt. Bei Bedarf kann der Membranteller 26 zum Beispiel mit Gewichten beschwert werden, um so das Betriebsgeräusch des Ventils 15 zu verändern, so daß durch eine angepaßte Schwingungsabstimmung eine optimale Geräuschabstimmung des Betriebsgeräuschs des Ventils 15 im Fahrzeug erfolgen kann.

Die Membran 22 besitzt an der dem Unterdruckanschluß 16 abgewandten Seite zum Ventilraum 24 hin eine umlaufende Wulst 29, die in Schließstellung des Ventils 15 von der Federkraft der Feder 27 an einen Dichtsitz 30 angepreßt wird, um anliegend an dem Dichtsitz 30 eine beispielsweise kreisförmige Öffnung 31 zum Anschlußstutzen 18 abzudecken, so daß eine Strömungsverbindung vom Anschlußstutzen 18 über den Ventilraum 24 zu einem beispielsweise quer zum Anschlußstutzen 18 vorgesehenen und ebenfalls mit dem Ventilraum 24 verbundenen Bypassstutzen 19 des Ventils 15 unterbrochen wird. Bei in Richtung des Unterdruckanschlusses 16 abgehobener Membran 22 wird die Öffnung 31 von der Membran 22 mehr oder weniger freigegeben, so daß eine Strömungsverbindung zwischen dem Anschlußstutzen 18 und dem Bypassstutzen 19 des Ventils 15 hergestellt wird. Der Bypassstutzen 19 dient zum Anschluß der zum Beispiel in Form einer Schlauchleitung ausgebildeten Bypassleitung 12 am Ventil 15.

Wird die Drosselkappe 5 geschlossen, so sinkt der Druck stromabwärts der Drosselklappe 5 und damit auch über die Steuerleitung 17 im Steuerraum 25, so daß die infolge des Druckes im Ventilraum 24 auf die Membran 22 wirkende Kraft ausreicht, die Kraft der Feder 27 zu überwinden und die Membran 22 vom Dichtsitz 30 abzuheben.

Das Ventil 15 ist mittels des Anschlußstutzens 18 am Ansaugrohr 4 gehalten, der hierzu in das rohrförmige Aufnahmeelement 32 am Ansaugrohr 4 eingeführt wird. Zur Abdichtung des Anschlußstutzens 18 im Aufnahmeelement 32 ist ein Dichtring 33 vorgesehen, der in einer Ringnut 34 am Anschlußstutzen 18 eingebracht ist und im eingebauten Zustand von einer dellenförmigen Vertiefung 35 elastisch aufgenommen wird. Die Vertiefung 35 ist in einer Innenwandung 45 der zum Beispiel abgestuft ausgebildeten, in das Ansaugrohr 4 führenden Aufnahmeöffnung 43 im Aufnahmeelement 32 eingebracht. Zur verdrehsicheren Halterung des Ventils 15 im Aufnahmeelement 32 ist ein Bajonettverschluß vorgesehen, der gebildet wird von zumindest einem am Ventil 15 ausgebildeten Bajonettriegel 36 und einem am Aufnahmeelement 32 vorgesehenen Bajonettschloß 39.

Wie in Figur 2 dargestellt ist, sind beispielsweise zwei Bajonettriegel 36 am Ventil 15 vorhanden, die zum Beispiel in Form eines Winkels 42 ausgebildet sind. Die Winkel 52 bestehen beispielsweise wie das untere Gehäuseteil 20 aus Kunststoff und sind federelastisch biegbar und zum Beispiel gegenüberliegend angeordnet. Die Winkel 42 besitzen jeweils ein von einer dem Anschlußstutzen 18 zugewandten Unterfläche 23 des unteren Gehäuseteils 20 in Richtung der Längsachse 60 des Ventils 15 abstehendes Axialteil 37 und ein quer zum Axialteil 37 ausgerichtetes, etwas längeres Radialteil 38. Die radial nach außen verlaufenden, wegstehenden Radialteile 38 der Winkel 42 weisen an ihren äußeren Enden 40 zur Unterfläche 23 des unteren Gehäuseteils 20 zugewandte Rastnasen 41 auf, die zur Verrastung der Winkel 42 mit den Bajonettschlössern 39 dienen.

Wie in Figur 3, einer Draufsicht auf das Aufnahmeelement 32 ohne eingestecktem Ventil 15, dargestellt ist, besitzt das Aufnahmeelement 32 einen Kragen 50, an dessen über die Aufnahmeöffnung 43 des Aufnahmeelements 32 radial überstehender Ringfläche die Bajonettschlösser 39 für die Bajonettriegel 36 vorgesehen sind. Zur Montage des Ventils 15 wird es mit seinem Anschlußstutzen 18 in die Aufnahmeöffnung 43 des Aufnahmeelements 32 eingeführt. Dabei greifen die zwei Bajonettriegel 36 beziehungsweise zwei Winkel 42 in entsprechend ausgesparte, eine L-Form aufweisende, sich von einer Außenfläche 51 des Kragens 50 in etwa bis zu einer querschnittskleineren Mantelfläche 52 des Aufnahmeelements 32 teilweise erstreckende Ausnehmungen 44 mit ihren Radialteilen 38 ein, die dann über eine untere Ringfläche 54 des Kragens 50 überstehen. Die Ausnehmungen 44 sind in Figur 4, einer Schnittdarstellung entlang einer Linie IV-IV in Figur 3, näher dargestellt. Die Ausnehmungen 44 begrenzen mit an der Außenfläche 51 radial nach innen erstreckenden, rechteckförmigen Einschnitten 47 die Bajonettschlösser 39. Nach dem Einführen des Ventils 15 mit dem Anschlußstutzen 18 in die Aufnahmeöffnung 43 kann es zum Beispiel im Uhrzeigersinn gedreht werden, wobei die Bajonettschlösser 39 in die von den Radialteilen 38 der Winkel 42 und der Unterfläche 23 des unteren Gehäuseteils 20 des Ventils 15 in Figur 2 nur teilweise sichtbaren Zwischenräume 46 eingreifen und die Enden 40 von der Unterfläche 23 weggespreizt an der Ringfläche 54 gleiten. Beim Erreichen einer Enddrehlage des Ventils 15 schnappen die an den Enden 40 der Winkel 42 vorgesehenen Rastnasen 41 in den Einschnitten 47 ein und verrasten dabei an Rastflächen 48 der Einschnitte 47.

In Figur 5 ist ein zweites erfindungsgemäßes Ausführungsbeispiel gezeigt, bei dem alle gleichen oder gleichwirkenden Teile mit denselben Bezugszahlen der Figuren 1 bis 4 gekennzeichnet sind. Die Figur 5 zeigt in teilweiser Schnittdarstellung ein Ventil 15, das denselben Innenaufbau wie das Ventil 15 in Figur 2 hat. Der Bajonettverschluß wird ebenfalls von zwei Winkeln 42' gebildet, welche die Bajonettriegel 36 für die Bajonettschlösser 39 darstellen. In Abwandlung zur Ausbildung der Winkel 42 in Figur 2 stehen die Winkel 42' gemäß Figur 5 von einer Außenfläche 53 des unteren Gehäuseteils 20 des Ventils 15 weg und verlaufen radial nach innen, so daß beide Enden 40 der Radialteile 38 der Winkel 42' dem Anschlußstutzen 18 zugewandt sind. An den Enden 40 der Winkel 42' sind ebenfalls Rastnasen 41 ausgebildet, die zur Verrastung mit den Bajonettschlössern 39 am Kragen 50 des Aufnahmeelements 32 dienen.

Wie in Figur 6, einer perspektivischen Darstellung des Aufnahmeelements 32, näher dargestellt ist, besitzt das Bajonettschloß 39 zum Aufnehmen der Winkel 42' beziehungsweise Durchführen der Radialteile 38 ebenfalls zwei gegenüberliegende, im wesentlichen nur rechteckförmig gestaltete Ausnehmungen 44. Nach dem Einführen der Winkel 42' in die Ausnehmungen 44 kann das Ventil 15 zum Beispiel im Uhrzeigersinn gedreht werden, wobei die von den Ausnehmungen 44 und der Außenfläche 51 des Kragens 50 begrenzten Bajonettschlösser 39 die Winkel 42' etwas aufbiegen, die dann in einer Enddrehlage des Ventils 15 mit den Rastnasen 41 in entsprechende aus dem Kragen 50 rechteckförmig ausgenommene Rastausnehmungen 61 einrasten. Die Enddrehlage des Ventils 15 ist durch von der Außenfläche 51 des Kragens 50 sich weiter radial nach außen erstreckende Abschnitte 62 begrenzt, die einander gegenüberliegend vorgesehen sind, so daß die Winkel 42' in der Enddrehlage des Ventils 15 daran anschlagen können.

In Figur 7 ist ein weiteres Ausführungsbeispiel gezeigt, bei dem alle gleichen und gleichwirkenden Teile mit denselben Bezugszahlen der vorherigen Ausführungsbeispiele gekennzeichnet sind. Zur Befestigung des Ventils 15' in Figur 7 ist ein gemäß Figur 2 ausgebildeter Bajonettverschluß vorgesehen. Es ist aber auch möglich, den Bajonettverschluß wie im zweiten Ausführungsbeispiel nach Figur 5 auszubilden. In Abwandlung zu den bisherigen Ausführungsbeispielen ist das Ventil 15' elektromagnetisch betätigbar ausgebildet. Das Ventil 15' besitzt ebenfalls eine Membran 22, die an einem Membranteller 26 angebracht ist. Zum Schalten des Ventils 15' ist ein Elektromagnet 70 vorgesehen, der im erregten Zustand eine Strömungsverbindung des Steuerraums 25 zum Unterdruckanschluß 16 herstellt, so daß die Membran 22 unterstützt vom Unterdruck im Ansaugrohr 4 von ihrem Dichtsitz 30 mehr oder weniger abheben kann, um eine Strömungsverbindung vom Anschlußstutzen 18 zum Bypassstutzen 19 herzustellen. Im entregten Zustand des Elektromagneten 70 wird diese Strömungsverbindung mit Hilfe der Federkraft der Feder 27 geschlossen, welche die Membran 22 an ihren Dichtsitz 30 drückt, so daß das Ventil 15' stromlos eine Schließstellung einnimmt. Das Ventilgehäuse des Ventils 15' ist dreiteilig ausgebildet und setzt sich aus einem topfförmigen unteren Gehäuseteil 20', einem mittleren Gehäuseteil 76 und einem Deckelteil 86 zusammen. Das mittlere Gehäuseteil 76 und das untere Gehäuseteil 20' sind in gleicher Weise wie in Figur 2 dargestellt und beschrieben mit Hilfe einer Rastverbindung lösbar miteinander verbunden.

Der Elektromagnet 70 weist ein aus magnetisch leitendem Material ausgebildetes, topfförmiges Gehäuse 71 auf, in das ein rohrförmig ausgebildeter Kern 73 zum Beispiel eingenietet ist. In dem Kern 73 ist eine Durchgangsbohrung 74 vorgesehen, die in einem Strömungskanal 75 endet, der zwischen einer Auswölbung 77 des mittleren Gehäuseteils 76 und dem Gehäuse 71 des Elektromagneten 70 ausgebildet ist und über eine Bohrung 79 mit der Umgebungsluft in Verbindung steht. In dem Strömungskanal 75 kann ein ringförmig ausgebildeter Filter 80 zwischen der Auswölbung 77 und dem Gehäuse 71 angeordnet sein. Innerhalb des Gehäuses 71 des Elektromagneten 70 ist der Kern 73 von einer Magnetwicklung 81 umgeben. Der Kern 73 ragt mit einem als erster Ventilsitz 84 ausgebildeten Absatz aus der Magnetwicklung 81 heraus. Über den ersten Ventilsitz 84 mündet die Durchgangsbohrung 74 des Kerns 73 in einen zwischen Gehäuse 71 des Elektromagneten 70 und dem Deckelteil 86 gebildeten Raum 90. Im Raum 90 ist dem Kern 73 gegenüberliegend ein plattenförmig ausgebildeter Flachanker 91 angeordnet, der axial verschiebbar ist. Koaxial zur Magnetwicklung 81 ist zwischen der Magnetwicklung 81 und dem Gehäuse 71 eine Druckfeder 92 vorgesehen, die sich einerseits am Gehäuse 71 des Elektromagneten 70 und andererseits am Flachanker 91 abstützt. Der Flachanker 91 weist im Bereich des ersten Ventilsitzes 84 eine Öffnung 94 auf, in die der ringförmige erste Ventilsitz 84 ragt und die auf der dem ersten Ventilsitz 84 abgewandten Seite des Flachankers 91 durch ein mit dem Flachanker 91 verbundenes Dichtelement 95, zum Beispiel ein Flachgummiteil, überdeckt wird. Im Deckelteil 86 ist dem Dichtelement 95 des Flachankers 91 zugewandt ein zweiter Ventilsitz 85 vorgesehen, in dem eine Strömungsbohrung 97 des am Deckelteil 86 ausgebildeten Unterdruckanschlusses 16 mündet. Die elektrische Ansteuerung des Ventils 15' kann zum Beispiel mittels eines elektronischen Steuergerätes 100 erfolgen, das hierzu über eine elektrische Steckverbindung 98 an das Ventil 15' angeschlossen wird.

Wie in Figur 7 dargestellt ist, wird bei nicht erregtem Elektromagneten 70 der Flachanker 91 durch die Druckfeder 92 in Richtung zum zweiten Ventilsitz 85 verschoben, den das Dichtelement 95 verschließt. In dieser Stellung kann über die Bohrung 79, die mit Abstand zur Verminderung der Verschmutzungsgefahr durch eine Nase 101 des Deckelteils 86 überdeckt wird, Umgebungsluft zum ersten Ventilsitz 84 und von dort über eine nicht näher dargestellte Strömungsverbindung in den Steuerraum 25 strömen. Die Membran 22 wird dabei unter Mitwirkung der Feder 27 auf den Dichtsitz 30 gepreßt, so daß keine Strömung vom Anschlußstutzen 18 zum Bypassstutzen 19 erfolgen kann. Bei erregtem Elektromagnet 70 wird der Flachanker 91 zum Kern 73 hingezogen, und das Dichtelement 95 verschließt den ersten Ventilsitz 84 und öffnet den zweiten Ventilsitz 85, so daß Luft aus dem Steuerraum 25 über den zweiten Ventilsitz 85 in den Unterdruckanschluß 16 abströmen kann. Dabei erfolgt ein Abheben der Membran 22 vom Dichtsitz 30, so daß eine Strömung über den Anschlußstutzen 18, den Dichtsitz 30 und den Bypassstutzen 19 erfolgen kann. Durch entsprechendes Schalten des Elektromagneten 70 mittels des elektronischen Steuergeräts 100 ist es möglich, die Luftmenge in der Bypassleitung 12 präzise zu regeln, um so einen genau vorgebbaren Druck stromabwärts der Verdichtungseinrichtung 2 zu erhalten.

Die in den Ausführungsbeispielen nach Figuren 2 bis 7 gezeigte und beschriebene Ausbildung des Bajonettverschlusses ist natürlich auch derart umkehrbar, daß das Bajonettschloß 39 am Ventil 15, 15' ausgebildet ist und der Bajonettriegel 36 am Aufnahmeelement 32.

## Patentansprüche

1. Ventil an einer Brennkraftmaschine, die über eine Ansaugeinrichtung (4) mit einer Verdichtungseinrichtung (2), insbesondere einen Turbolader, verfügt, und mit einer um die Verdichtungseinrichtung (2) herumführenden Bypassleitung (12), in welcher das Ventil (15) zum Öffnen oder Schließen der Bypassleitung (12) vorgesehen ist, **dadurch gekennzeichnet, daß** die Ansaugeinrichtung (4) ein rohrförmiges Aufnahmeelement (32) besitzt, in welches das Ventil (15) zumindest teilweise eingebracht ist und mittels eines von Ventil (15) und Aufnahmeelement (32) gebildeten Bajonettverschlusses (36, 42, 42', 44, 47, 61) befestigt ist.

2. Ventil nach Anspruch 1, **dadurch gekennzeichnet, daß** der Bajonettverschluß (36, 42, 42', 44, 47, 61) von zumindest einem Bajonettriegel (36) gebildet wird, der in Form eines von einer Unterfläche (23) eines Gehäuseteils (20) des Ventils (15, 15') abstehenden Winkels (42) ausgebildet ist, der mit einem am Aufnahmeelement (32) vorgesehenen Bajonettschloß (39) verrastet.

3. Ventil nach Anspruch 2, **dadurch gekennzeichnet, daß** das Bajonettschloß (39) von Ausnehmungen (44, 61) und Einschnitten (47) gebildet wird, die an einem am Aufnahmeelement (32) ausgebildeten Kragen (50) vorgesehen sind.

4. Ventil nach Anspruch 2, **dadurch gekennzeichnet, daß** der Winkel (42) von der Unterfläche (23) des Gehäuseteils (20) radial nach außen wegstehend ausgebildet ist.

5. Ventil nach Anspruch 2, **dadurch gekennzeichnet, daß** der Winkel (42') von der Unterfläche (23) des Gehäuseteils (20) radial nach innen wegstehend ausgebildet ist.

6. Ventil nach Anspruch 4 oder 5, **dadurch gekennzeichnet, daß** der Winkel (42; 42') an seinem Ende (40) eine der Unterfläche (23) des Gehäuseteils (20) zugewandte Rastnase (41) aufweist.

7. Ventil nach Anspruch 6, **dadurch gekennzeichnet, daß** die Rastnase (41) in vorgesehene Einschnitte (47) oder Ausnehmungen (61) eines am Aufnahmeelement (32) ausgebildeten Kragens (50) verrastet.

8. Ventil nach Anspruch 1, **dadurch gekennzeichnet, daß** das Ventil (15, 15') aus zumindest zwei Gehäuseteilen (20, 21) aufgebaut ist, die mittels einer Rastverbindung (57, 58) lösbar miteinander verbunden sind.

9. Ventil nach Anspruch 1, **dadurch gekennzeichnet, daß** das Ventil (15, 15') eine Membran (22) aufweist, die mittels Unterdruck aus der Ansaugeinrichtung (4) betätigbar ist.

10. Ventil nach Anspruch 1 oder 9, **dadurch gekennzeichnet, daß** das Ventil (15') elektromagnetisch betätigbar ausgebildet ist.

## Claims

1. Valve on an internal combustion engine which has an intake device (4) with a compression device (2), in particular a turbocharger, and with a bypass line (12) which leads around the compression device (2) and in which the valve (15) is provided for opening or closing the bypass line (12), **characterized in that** the intake device (4) possesses a tubular reception element (32), into which the valve (15) is introduced at least partially and is fastened by means of a bayonet fastening (36, 42, 42', 44, 47, 61) formed by the valve (15) and reception element (32).

2. Valve according to Claim 1, **characterized in that** the bayonet fastening (36, 42, 42', 44, 47, 61) is formed by at least one bayonet catch (36) produced in the form of an angle (42) which projects from a lower face (23) of a housing part (20) of the valve (15, 15') and which interlocks with a bayonet lock (39) provided on the reception element (32).

3. Valve according to Claim 2, **characterized in that** the bayonet lock (39) is formed by recesses (44, 61) and indentations (47) which are provided on a collar (50) produced on the reception element (32).

4. Valve according to Claim 2, **characterized in that** the angle (42) is produced to extend radially outwards from the lower face (23) of the housing part (20).

5. Valve according to Claim 2, **characterized in that** the angle (42') is produced to extend radially inwards from the lower face (23) of the housing part (20).

6. Valve according to Claim 4 or 5, **characterized in that** the angle (42; 42') has at its end (40) a locking nose (41) facing the lower face (23) of the housing part (20).

7. Valve according to Claim 6, **characterized in that** the locking nose (41) interlocks into intended indentations (47) or recesses (61) of a collar (50) produced on the reception element (32).

8. Valve according to Claim 1, **characterized in that** the valve (15, 15') is constructed from at least two housing parts (20, 21) which are releasably connected to one another by means of a locking connection (57, 58).

9. Valve according to Claim 1, **characterized in that** the valve (15, 15') has a diaphragm (22) which is capable of being actuated by means of underpressure from the intake device (4).

10. Valve according to Claim 1 or 9, **characterized in that** the valve (15') is produced so as to be capable of being actuated electromagnetically.

## Revendications

1. Soupape de moteur à combustion interne équipé d'une installation d'aspiration (4) avec une installation de compression (2) notamment un turbocompresseur et une conduite de dérivation (12) qui contourne l'installation de compression (2), cette conduite de dérivation comportant une vanne (15) pour ouvrir et fermer la conduite de dérivation (12),
**caractérisée en ce que**
l'installation d'aspiration (4) comporte un élément de réception (32) tubulaire dans lequel est placée au moins partiellement la vanne (15) et cette vanne est fixée à l'aide d'une liaison de type baïonnette (36, 42, 42', 44, 47, 61) formée par la vanne (15) et l'élément de réception (32).

2. Soupape selon la revendication 1,
**caractérisée en ce que**
la liaison de type baïonnette (36, 42, 42', 44, 47, 61) est formée par au moins un verrou (36) réalisé par une partie repliée (42) de la surface inférieure (23) d'une partie de boîtier (20) de la vanne (15, 15'), cet élément replié s'accrochant à une serrure de baïonnette (39) prévue sur l'élément de réception (32).

3. Soupape selon la revendication 2,
**caractérisée en ce que**
la serrure (39) est formée par des cavités (44, 61) et des encoches (47) prévues dans une collerette (50) réalisée sur l'élément de réception (32).

4. Soupape selon la revendication 2,
**caractérisée en ce que**
la partie repliée (42) est en saillie vers le bas, radialement par rapport à la surface inférieure (23) de la partie de boîtier (20).

5. Soupape selon la revendication 2,
**caractérisée en ce que**
la partie repliée (42') est réalisée en saillie vers l'intérieur, radialement par rapport à la surface inférieure (23) de la partie de boîtier (20).

6. Soupape selon l'une quelconque des revendications 4 ou 5,
**caractérisée en ce que**
la partie repliée (42, 42') comporte à une extrémité (40), un bec d'accrochage (41) tourné vers la face inférieure (23) de la partie de boîtier (20).

7. Soupape selon la revendication 6,
**caractérisée en ce que**
le bec d'accrochage (41) est accroché dans des encoches (47) ou cavités (61) prévues dans une collerette (50) réalisée sur l'élément de réception (32).

8. Soupape selon la revendication 1,
**caractérisée en ce que**
la soupape (15, 15') est formée d'au moins deux parties de boîtier (20, 21) reliées l'une à l'autre de manière amovible par une liaison d'encliquetage (57, 58).

9. Soupape selon la revendication 1,
**caractérisée en ce que**
la soupape (15, 15') comporte une membrane (22) actionnée par la dépression à partir de l'installation d'aspiration (4).

10. Soupape selon l'une quelconque des revendications 1 ou 9,
**caractérisée en ce que**
la soupape (15') est à commande électromagnétique.
